# EUROPEAN PATENT SPECIFICATION

(11) **EP 4 391 185 B1**
(45) Date of publication and mention of the grant of the patent: **18.11.2026**
(21) Application number: 22927920.3
(22) Date of filing: 28.02.2022
(51) Int. Cl.: H01M 50/317, H01M 50/107, H01M 50/342, H01M 10/04

(54) **SHELL, BATTERY CELL, BATTERY, AND POWER CONSUMPTION DEVICE**
GEHÄUSE, BATTERIEZELLE, BATTERIE UND STROMVERBRAUCHENDE VORRICHTUNG
BOÎTIER, ÉLÉMENT DE BATTERIE, BATTERIE ET DISPOSITIF CONSOMMATEUR D'ÉNERGIE

(43) Date of publication of application: 26.06.2024
(73) Proprietor: Contemporary Amperex Technology (Hong Kong) Limited, Central, Central And Western District (HK)
(72) Inventor: CHEN, Xiaobo, Ningde, Fujian 352100 (CN); GAO, Xiongwei, Ningde, Fujian 352100 (CN); GU, Mingguang, Ningde, Fujian 352100 (CN)
(74) Representative: Gong, Jinping
(86) International application number: PCT/CN2022/078482
(87) International publication number: WO 2023/159639

(56) References cited:
- CN-A- 101 388 472
- CN-A- 103 999 259
- CN-A- 111 564 590
- CN-C- 100 585 916
- CN-Y- 2 750 479
- CN-Y- 2 805 102
- JP-A- 2001 266 812
- JP-A- 2003 297 322
- JP-A- 2005 038 773
- JP-A- 2014 029 865
- KR-B1- 101 350 664
- KR-B1- 102 246 483
- US-A1- 2011 117 424
- US-A1- 2021 242 529

## Description

### Technical Field

The present application relates to the field of battery technologies, and particularly to a shell as specified in any claims 1-4, a battery cell as specified in claim 5, a battery as specified in claim 6, and a power consumption device as specified in claim 7.

### Background Art

With the development of new energy technologies, batteries are increasingly widely used, for example, in mobile phones, notebook computers, scooters, electric vehicles, electric airplanes, electric ships, electric toy cars, electric toy boats, electric toy planes and electric tools.

As an energy storage element, battery cells generally undergo chemical reactions through electrode assemblies and electrolytes to output electrical energy. In battery technologies, both the performance and safety of battery cells should be considered. Therefore, how to improve the safety of battery cells is an urgent technical problem to be solved in the battery technologies.

Document US2021/242529A1 discloses a battery cell wherein a cell housing defines a cavity for receiving core material. The cell housing is provided with a side cover and top and bottom covers, to seal respective top and bottom openings. Side vent grooves are formed in the side cover and positioned to be closer to the second cover than the first cover.

### Summary

The present invention is defined by the appended claims. Embodiments of the present application provide a shell, a battery cell, a battery, and a power consumption device, which can improve the safety of a battery cell.

In a first aspect, an embodiment of the present application provides a shell for accommodating an electrode assembly, including: a peripheral wall that extends in a first direction and is used for enclosing an outer side of the electrode assembly, where the peripheral wall has a pressure relief portion, and the pressure relief portion is configured to flip and open towards an outside of the shell when a pressure or temperature inside the shell reaches a threshold, so as to release the pressure inside the shell; and a pressure relief groove disposed on the peripheral wall, where the pressure relief groove includes a first groove, a second groove, and a third groove, where the first groove is opposite to the third groove, and the first groove, the second groove, and the third groove are sequentially connected to jointly confine a pressure relief portion, and where an angle α between an extension direction of the first groove and the first direction satisfies: 45°≤α<90°. The peripheral wall is a cylindrical or a cuboid, and the first direction is a length direction of the peripheral wall. The peripheral wall is provided with at least one pressure relief groove group, and each pressure relief groove group includes a plurality of pressure relief grooves arranged at intervals in a circumferential direction of the peripheral wall. The at least one pressure relief groove group includes a first pressure relief groove group and a second pressure relief groove group, and the first pressure relief groove group and the second pressure relief groove group are spaced on the peripheral wall in the first direction. A tilt direction of the pressure relief portion confined by the pressure relief groove in the first pressure relief groove group is the same as that of the pressure relief portion confined by the pressure relief groove in the second pressure relief groove group; or the tilt direction of the pressure relief portion confined by the pressure relief groove in the first pressure relief groove group is opposite to that of the pressure relief portion confined by the pressure relief groove in the second pressure relief groove group. In the first direction, a middle position of the peripheral wall is located between the first pressure relief groove group and the second pressure relief groove group, and both the pressure relief portion confined by the pressure relief groove in the first pressure relief groove group and the pressure relief portion confined by the pressure relief groove in the second pressure relief groove group tilt towards the middle position; or in the first direction, the middle position of the peripheral wall is located between the first pressure relief groove group and the second pressure relief groove group, and both the pressure relief portion confined by the pressure relief groove in the first pressure relief groove group and the pressure relief portion confined by the pressure relief groove in the second pressure relief groove group tilt away from the middle position. The second groove is an arc-shaped groove. The first groove and the third groove are parallel and tangent to the second groove.

In the foregoing technical solution, the angle between the extension direction of the first groove and the first direction is less than 90° and not less than 45°, so that the pressure relief portion confined by the first groove, the second groove, and the third groove is in a tilt state. During pressure relief, the pressure relief portion can open obliquely, which reduces occupation on an external space of the shell after the pressure relief portion opens, reduces the risk of blockage of the pressure relief portion, enables the pressure relief portion to open to a greater extent, increases a pressure relief area of the shell, increases a pressure relief rate, and improves the safety of a battery cell.

In some embodiments, the angle α satisfies: 45°≤α≤75°. The tilt angle of the pressure relief portion is increased, and the pressure relief rate of the shell is further increased.

In some embodiments, in the extension direction of the first groove, the pressure relief portion has an opening end and a flipping end opposite; the second groove is located at the opening end, and the pressure relief portion tilts towards one end close to the peripheral wall in the first direction from the flipping end to the opening end; in the first direction, the first groove is closer to that end than the third groove; and a length of the third groove is greater than that of the first groove. In this case, the area of the pressure relief portion can be effectively increased, and the degree of tilt of the pressure relief portion after flipping and opening towards the outside of the shell can be increased, so that the pressure relief portion can open to a greater extent to further increase the pressure relief area of the shell.

This structure enables the shell to release pressure from a plurality of different positions in the circumferential direction of the peripheral wall, thereby further increasing the pressure relief rate. In addition, due to the tilt arrangement of the pressure relief portion, more pressure relief portions can be arranged in the circumferential direction of the peripheral wall.

This structure enables the emissions inside the shell to be discharged out from the pressure relief groove in the first pressure relief groove group and the pressure relief groove in the second pressure relief groove group when the battery cell undergoes thermal runaway, thereby further increasing the pressure relief rate of the shell.

This structure enables the pressure relief portion corresponding to the first pressure relief groove group and the pressure relief portion corresponding to the second pressure relief groove group to tilt towards the same end of the peripheral wall when opening towards the outside of the shell, so that the emissions inside the shell can flow towards the same end of the peripheral wall.

This structure enables the pressure relief portion corresponding to the first pressure relief groove group and the pressure relief portion corresponding to the second pressure relief groove group to tilt towards two ends of the peripheral wall when opening towards the outside of the shell, so that the emissions inside the shell can flow towards two ends of the peripheral wall or a middle area of the peripheral wall.

This structure enables the emissions inside the shell to flow towards the middle area of the peripheral wall.

This structure enables the emissions inside the shell to flow towards the two ends of the peripheral wall.

The second groove is simple in structure and easy to manufacture. In addition, the second arc-shaped groove is beneficial for the peripheral wall to rupture along the second groove first and then along the first groove and the third groove when the pressure inside the shell reaches the threshold, so that the pressure relief portion flips and opens towards the outside of the shell.

This structure enables the second groove to transition more smoothly to the first groove and the third groove, enables the peripheral wall to rupture more smoothly along the first groove and the third groove after rupturing along the second groove, and enables the pressure relief portion to flip and open more smoothly on the outside of the shell.

The cylindrical peripheral wall enables the pressure relief portion to be in a bent state. During pressure relief, the bent pressure relief portion is more likely to flip and open towards the outside of the shell.

In some embodiments, the pressure relief groove is disposed on an outer surface of the peripheral wall. In this case, the pressure relief groove can be formed on the peripheral wall more easily.

In a second aspect, an embodiment of the present application provides a battery cell, including: an electrode assembly; and the shell provided in any one of the foregoing embodiments of the first aspect, where the shell is used for accommodating the electrode assembly.

In a third aspect, an embodiment of the present application provides a battery, including: the battery cell provided in any of the foregoing embodiments of the second aspect; and a box body used for accommodating the battery cell.

In a fourth aspect, an embodiment of the present application provides a power consumption device, including the battery provided in any of the foregoing embodiments of the third aspect.

In a non-claimed aspect, an embodiment of the present application provides a manufacturing method for a shell, the method including: providing a shell, where the shell has a peripheral wall extending in a first direction; and machining a pressure relief groove on the peripheral wall of the shell, where the pressure relief groove includes a first groove, a second groove, and a third groove; the first groove is opposite to the third groove; the first groove, the second groove, and the third groove are sequentially connected to jointly confine a pressure relief portion; the pressure relief portion is configured to flip and open towards an outside of the shell when a pressure or temperature inside the shell reaches a threshold, so as to release the pressure inside the shell; and an angle α between an extension direction of the first groove and the first direction satisfies: 45°≤α<90°.

In a non-claimed aspect, an embodiment of the present application further provides a manufacturing device for a shell, the manufacturing device including: a provision apparatus, configured to provide a shell, where the shell has a peripheral wall extending in a first direction; and a machining apparatus, configured to machine a pressure relief groove on the peripheral wall, where the pressure relief groove includes a first groove, a second groove, and a third groove; the first groove is opposite to the third groove; the first groove, the second groove, and the third groove are sequentially connected to jointly confine a pressure relief portion; the pressure relief portion is configured to flip and open towards an outside of the shell when a pressure or temperature inside the shell reaches a threshold, so as to release the pressure inside the shell; and an angle α between an extension direction of the first groove and the first direction satisfies: 45°≤α<90°.

### Brief Description of Drawings

In order to illustrate the technical solutions in the embodiments of the present application more clearly, brief description will be made below to the drawings required in the embodiments. It should be understood that the following drawings show only some embodiments of the present application and should not be regarded as limiting the scope, and other relevant drawings may be obtained based on these drawings by those of ordinary skill in the art without any creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a schematic structural diagram of a shell according to some embodiments of the present application;
FIG. 5 is a schematic structural diagram of a shell according to other embodiments of the present application;
FIG. 6 is a schematic structural diagram of a shell according to still other embodiments of the present application;
FIG. 7 is a schematic structural diagram of a battery module according to some embodiments of the present application;
FIG. 8 is a partially enlarged view of the shell shown in FIG. 4 at position A;
FIG. 9 is a schematic arrangement diagram of battery cells according to some embodiments of the present application;
FIG. 10 is a flowchart of a manufacturing method for a shell according to some embodiments of the present application; and
FIG. 11 is a schematic block diagram of a manufacturing device for a shell according to some embodiments of the present application.

Reference numerals: 1000 - vehicle; 100 - battery; 10 - box body; 11 - first portion; 12 - second portion; 20 - battery cell; 21 - shell; 211 - peripheral wall; 2111 - first end portion; 2112 - second end portion; 2113 - busbar; 212 - bottom wall; 213 - end cover; 2131 - electrode terminal; 214 - pressure relief groove; 214a - first relief groove group; 214b - second pressure relief groove group; 2141 - first groove; 2142 - second groove; 2142a - opening position; 2143 - third groove; 215 - pressure relief portion; 215a - first pressure relief portion; 215b - second pressure relief portion; 2151 - opening end; 2152 - flipping end; 22 - electrode assembly; 221 - positive tab; 222 - negative tab; 23 - current collecting member; 30 - battery module; 31 - mounting rack; 200 - controller; 300 - motor; 2000 - manufacturing device; 2100 - provision apparatus; 2200 - machining apparatus; Z - first direction.

### Detailed Description of Embodiments

In order to make the objectives, technical solutions and advantages of the embodiments of the present application clearer, the technical solutions in the embodiments of the present application will be described clearly below with reference to the drawings in the embodiments of the present application. Apparently, the described embodiments are some of the embodiments of the present application, not all of them. All other embodiments obtained by those of ordinary skill in the art based on the embodiments of the present application without creative efforts shall fall within the scope of protection of the present application.

Unless otherwise defined, all technological and scientific terms used in the present application have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and claims of the present application as well as the brief description of the drawings described above are intended to cover non-exclusive inclusion. In the specification and claims of the present application or in the foregoing drawings, the terms "first", "second", and the like are used to distinguish different objects and are not used to describe a specific sequence or a primary and secondary relation.

The "embodiment" mentioned in the present application means that specific features, structures or characteristics described in conjunction with the embodiment may be included in at least one embodiment of the present application. The phrase at various locations in the specification does not necessarily refer to the same embodiment, or an independent or alternative embodiment exclusive of another embodiment.

In the description of the present application, it should be noted that, unless otherwise specified and defined, the terms "mounted", "connected", "connection", and "attached" should be generally understood, for example, the "connection" may be a fixed connection, a detachable connection, an integral connection, a direct connection, or an indirect connection through a medium, or an internal communication of two elements. Those of ordinary skill in the art may appreciate the specific meanings of the foregoing terms in the present application to specific circumstances.

The term "and/or" in the present application describes only an association relationship for describing associated objects and represents that three relationships may exist. For example, A and/or B may represent the following three cases: Only A exists, both A and B exist, and only B exists. In addition, the character "/" in the present application generally indicates an "or" relationship between successive associated objects.

In the embodiments of the present application, the same reference numerals represent the same components, and for simplicity, detailed descriptions of the same components are omitted in different embodiments. It should be understood that dimensions such as thickness, length and width of various components and dimensions such as overall thickness, length and width of integrated apparatuses in the embodiments of the present application shown in the drawings are merely illustrative examples and should not constitute any limitations on the present application.

In the present application, the term "a plurality of" means two (inclusive) or more.

In the present application, battery cells may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present application. The battery cells may be cylindrical, flat, cuboid, or in other shapes, which is also not limited by the embodiments of the present application. The battery cells are generally divided into three types according to the way of packaging: cylindrical battery cells, square battery cells, and soft package battery cells, which are not limited in the embodiments of the present application.

The battery mentioned in the embodiments of the present application refers to a single physical module that includes one or more battery cells to provide a higher voltage and capacity. For example, the battery mentioned in the present application may include a battery module or a battery pack. The battery generally includes a box body for packaging one or more battery cells. The box body may prevent liquid or other foreign matters from affecting the charging or discharging of the battery cells.

The battery cell includes an electrode assembly and an electrolyte, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and the positive electrode current collector not coated with the positive electrode active material layer protrudes from the positive electrode current collector coated with the positive electrode active material layer and is used as a positive tab. In an example of a lithium-ion battery, a material of the positive electrode current collector may be aluminum, and a positive electrode active material may be lithium cobalt oxide, lithium iron phosphate, ternary lithium, lithium manganate oxide, or the like. The negative electrode sheet includes a negative electrode current collector and a negative electrode active material layer. The negative electrode active material layer is coated on a surface of the negative electrode current collector, and the negative electrode current collector not coated with the negative electrode active material layer protrudes from the negative electrode current collector coated with the negative electrode active material layer and is used as a negative tab. A material of the negative electrode current collector may be copper, and a negative electrode active material may be carbon, silicon, or the like. In order to ensure that no fusing occurs when a large current passes through, there are a plurality of positive tabs which are stacked together and a plurality of negative tabs which are stacked together. A material of the separator may be polypropylene (PP), polyethylene (PE), or the like. In addition, the electrode assembly may be of a winding structure or a laminated structure, and the embodiments of the present application are not limited thereto.

The development of battery technologies needs to consider many design factors simultaneously, such as energy density, cycle life, discharge capacity, charge and discharge rate, and other performance parameters. In addition, the safety of the battery should also be considered.

For a battery cell, in order to ensure the safety of the battery cell, a pressure relief mechanism is generally disposed in the battery cell to release pressure inside the battery cell.

The inventor noticed that, even if the pressure relief mechanism is disposed in the battery cell, risks of fire and explosion still often occur in the battery cell. At present, a pressure relief groove is generally disposed on an end cover of the battery cell, and pressure is relieved through rupture of the end cover at the pressure relief groove. After a plurality of battery cells are stacked together, a pressure relief area where the pressure relief groove on the end cover is located is blocked by other battery cells, resulting in untimely pressure relief and safety accidents.

To reduce the risk of blockage of the pressure relief area, the pressure relief groove may be disposed on a peripheral wall of a shell. The inventor found, after a plurality of battery cells are arranged side by side, the gap between the battery cells is limited, a pressure relief portion confined by the pressure relief groove is easily limited by other battery cells when flipping outwards, and the pressure relief portion opens little during pressure relief, which affects the pressure relief rate.

In view of this, an embodiment of the present application provides a shell. A pressure relief groove is disposed on a peripheral wall of the shell, where the pressure relief groove includes a first groove, a second groove, and a third groove; the first groove is opposite to the third groove, and the first groove, the second groove, and the third groove are sequentially connected and jointly confine a pressure relief portion; and an angle α between an extension direction of the first groove and an extension direction of the peripheral wall satisfies: 45°≤α<90°.

In such a battery cell, the angle between the extension direction of the first groove and a first direction is less than 90° and not less than 45°, so that the pressure relief portion confined by the first groove, the second groove, and the third groove is in a tilt state. During pressure relief, the pressure relief portion can open obliquely, which reduces occupation on an external space of the shell after the pressure relief portion opens, reduces the risk of blockage of the pressure relief portion, enables the pressure relief portion to open to a greater extent, increases a pressure relief area of the shell, increases a pressure relief rate, and improves the safety of a battery cell.

The shell described in this embodiment of the present application is suitable for battery cells, batteries, and power consumption devices using batteries.

The power consumption devices may be vehicles, mobile phones, portable devices, notebook computers, ships, spacecrafts, electric toys, electric tools, and the like. The vehicles may be oil-fueled vehicles, gas-fueled vehicles, or new energy vehicles, and the new energy vehicles may be pure electric vehicles, hybrid electric vehicles, extended range vehicles, or the like; the spacecrafts include airplanes, rockets, space shuttles, spaceships, and the like; the electric toys include fixed or mobile electric toys, such as game consoles, electric car toys, electric boat toys, and electric plane toys; and the electric tools include electric metal cutting tools, electric grinding tools, electric assembly tools, and railway electric tools, such as electric drills, electric grinders, electric wrenches, electric screwdrivers, electric hammers, electric impact drills, concrete vibrators, and electric planers. The embodiments of the present application do not impose special limitations on the foregoing power consumption devices.

For convenient description, the following embodiments are described by an example of a vehicle as a power consumption device.

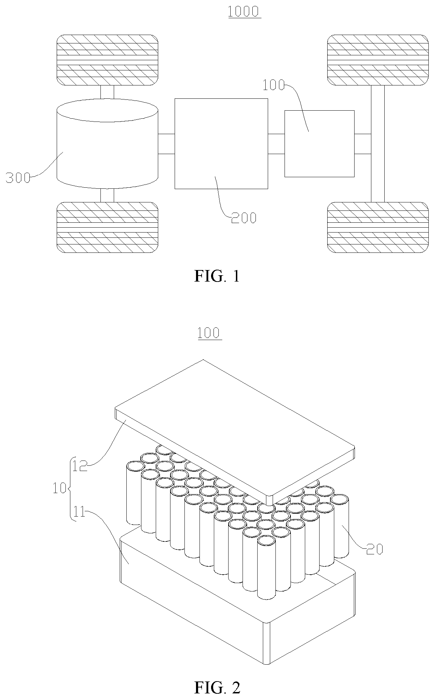

Refer to FIG. 1. FIG. 1 is a schematic structural diagram of a vehicle 1000 according to some embodiments of the present application. A battery 100 is provided inside the vehicle 1000. The battery 100 may be disposed at the bottom, head or tail of the vehicle 1000. The battery 100 may be used for supplying power to the vehicle 1000. For example, the battery 100 may be used as an operation power supply of the vehicle 1000.

The vehicle 1000 may further include a controller 200 and a motor 300. The controller 200 is used for controlling the battery 100 to supply power to the motor 300, for example, for the working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Refer to FIG. 2. FIG. 2 is an exploded view of a battery 100 according to some embodiments of the present application. The battery 100 includes a box body 10 and battery cells 20, where the box body 10 is used for accommodating the battery cells 20.

The box body 10 is a component that accommodates the battery cells 20, the box body 10 provides a space for the battery cells 20, and the box body 10 may have various structures. In some embodiments, the box body 10 may include a first portion 11 and a second portion 12, and the first portion 11 and the second portion 12 cover each other to confine the space for accommodating the battery cells 20. The first portion 11 and the second portion 12 may be in various shapes, such as cuboid or cylindrical. The first portion 11 may be of a hollow structure with an open side, the second portion 12 may also be of a hollow structure with an open side, and the open side of the second portion 12 covers the open side of the first portion 11 to form the box body 10 with the accommodating space. Alternatively, the first portion 11 is of a hollow structure with an open side, the second portion 12 is of a plate-like structure, and the second portion 12 covers the open side of the first portion 11 to form the box body 10 with the accommodating space. The first portion 11 and the second portion 12 may be sealed through a sealing element, which may be a sealing ring, a sealant, or the like.

There may be one or more battery cells 20 in the battery 100. If there is a plurality of battery cells 20, the plurality of battery cells 20 may be connected in series, parallel, or series and parallel. The series and parallel connection refers to both series and parallel connection in the plurality of battery cells 20. The plurality of battery cells 20 may be first connected in series, parallel, or series and parallel to form a battery module 30 (not shown in FIG. 2), and then a plurality of battery modules 30 may be connected in series, parallel, or series and parallel to form a whole accommodated in the box body 10. Alternatively, all the battery cells 20 may be directly connected in series, parallel, or series and parallel together, and then the whole formed by all the battery cells 20 is accommodated in the box body 10.

In some embodiments, the battery 100 may further include a converging component, and the plurality of battery cells 20 may be electrically connected through the converging component to implement the series, parallel, or series and parallel connection of the plurality of battery cells 20. The converging component may be a metal conductor, such as copper, iron, aluminum, stainless steel, or aluminum alloy.

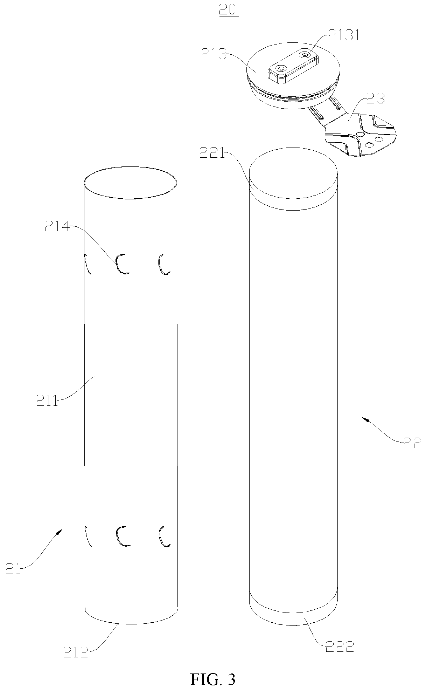

Refer to FIG. 3. FIG. 3 is an exploded view of a battery cell 20 according to some embodiments of the present application. The battery cell 20 includes a shell 21 and an electrode assembly 22 accommodated in the shell 21.

The shell 21 is a component that accommodates the electrode assembly 22. The shell 21 may be in various shapes, such as cylindrical or cuboid. The shell 21 may include a peripheral wall 211, a bottom wall 212, and an end cover 213. The bottom wall 212 is disposed at one end of the peripheral wall 211 in an extension direction, the peripheral wall 211 encloses an edge of the bottom wall 212, and the peripheral wall 211 is integrally formed with the bottom wall 212. In the extension direction of the peripheral wall 211, an opening is formed at an end, opposite to the bottom wall 212, of the peripheral wall 211. The end cover 213 is used for closing the opening of the peripheral wall 211, so as to form a closed space inside the shell 21 for accommodating the electrode assembly 22, an electrolyte, and the like. An electrode terminal 2131 may be disposed on the end cover 213 and electrically connected to the electrode assembly 22.

The electrode assembly 22 is a component that undergoes electrochemical reactions in the battery cell 20. The electrode assembly 22 may be cylindrical, cuboid, or the like. If the electrode assembly 22 is cylindrical, the shell 21 may also be cylindrical. If the electrode assembly 22 is cuboid, the shell 21 may also be cuboid.

The electrode assembly 22 may include a positive electrode sheet, a negative electrode sheet, and a separator. The electrode assembly 22 may be of a winding structure formed by winding the positive electrode sheet, the separator, and the negative electrode sheet, or a stacked structure formed by stacking the positive electrode sheet, the separator, and the negative electrode sheet. The positive electrode sheet may include a positive electrode current collector and a positive electrode active material layer coated on two opposite sides of the positive electrode current collector. The negative electrode sheet may include a negative electrode current collector and a negative electrode active material layer coated on two opposite sides of the negative electrode current collector. The electrode assembly 22 has a positive tab 221 and a negative tab 222, the positive tab 221 may be a portion not coated with the positive electrode active substance layer on the positive electrode sheet, and the negative tab 222 may be a portion not coated with the negative electrode active substance layer on the negative electrode sheet. The positive tab 221 may be electrically connected to the electrode terminal 2131 on the end cover 213, and the negative tab 222 may be electrically connected to the bottom wall 212 of the shell 21.

Of course, the positive tab 221 may be directly connected to the electrode terminal 2131, for example, the positive tab 221 may be directly welded to the electrode terminal 2131; or the positive tab 221 may alternatively be indirectly connected to the electrode terminal 2131, for example, the positive tab 221 is indirectly connected to the electrode terminal 2131 through a current collecting member 23. The negative tab 222 may be directly connected to the bottom wall 212, for example, the negative tab 222 may be directly welded to the bottom wall 212; or the negative tab 222 may alternatively be indirectly connected to the bottom wall 212, for example, the negative tab 222 is indirectly connected to the bottom wall 212 through a current collecting member 23. For example, in FIG. 3, the positive tab 221 is indirectly connected to the electrode terminal 2131 through the current collecting member 23, and the negative tab 222 is directly welded to the bottom wall 212.

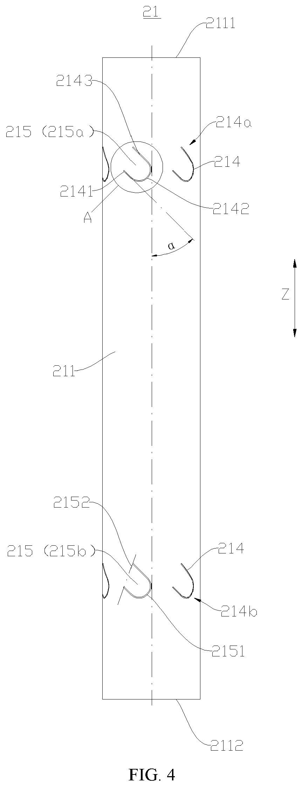

Refer to FIG. 4. FIG. 4 is a schematic structural diagram of a shell 21 according to some embodiments of the present application. The embodiments of the present application provide a shell 21 for accommodating an electrode assembly 22. The shell 21 includes a peripheral wall 211 and a pressure relief groove 214. A peripheral wall 211 extends in a first direction Z and is used for enclosing an outer side of the electrode assembly 22, the peripheral wall 211 has a pressure relief portion 215, and the pressure relief portion 215 is configured to flip and open towards the outside of the shell 21 when a pressure or temperature inside the shell 21 reaches a threshold, so as to release the pressure inside the shell 21. A pressure relief groove 214 is disposed on the peripheral wall 211, and the pressure relief groove 214 includes a first groove 2141, a second groove 2142, and a third groove 2143, where the first groove 2141 is opposite to the third groove 2143, and the first groove 2141, the second groove 2142, and the third groove 2143 are sequentially connected to jointly confine the pressure relief portion 215. An angle α between an extension direction of the first groove 2141 and the first direction satisfies: 45°≤α<90°.

The peripheral wall 211 is a main body of the shell 21 that extends in the first direction Z. The peripheral wall 211 may be cylindrical, cuboid, or the like. The first direction Z is a length direction of the peripheral wall 211. For example, the peripheral wall 211 is cylindrical, and the first direction Z is an axial direction of the peripheral wall 211. In some embodiments, the shell 21 may further include a bottom wall 212 and an end cover 213, the bottom wall 212 and the end cover 213 are separately disposed at two ends of the peripheral wall 211 in the first direction Z, and the bottom wall 212 is integrally formed with the peripheral wall 211. In other embodiments, the shell 21 may further include two end covers 213, which cover two ends of the peripheral wall 211 in the first direction Z.

The pressure relief groove 214 may be formed on the peripheral wall 211 in various ways, such as engraving, stamping, or milling. In the pressure relief groove 214, the first groove 2141 is opposite to the third groove 2143, and the first groove 2141 is connected to the third groove 2143 through the second groove 2142. The pressure relief groove 214 of this structure is roughly in a U-shaped structure.

The pressure relief portion 215 is an area confined by the pressure relief groove 214 on the peripheral wall 211, and the pressure relief groove 214 is located at an edge of the pressure relief portion 215. Due to the U-shaped structure of the pressure relief groove 214, the edge contour of the pressure relief portion 215 is also U-shaped. When the pressure inside the shell 21 reaches the threshold, the shell 21 reaches a detonation pressure and the pressure relief portion 215 begins to open. The pressure relief groove 214 is disposed on the peripheral wall 211 at a relatively weak position. When the pressure or temperature inside the shell 21 reaches the threshold, the peripheral wall 211 will extend the pressure relief groove 214 to rupture, so that the pressure relief portion 215 ultimately flips and opens towards the outside of the shell 21. After the pressure relief portion 215 opens, an opening portion is formed on the peripheral wall 211 corresponding to the pressure relief portion 215, and emissions inside the shell 21 will be discharged through the opening portion, so that the pressure relief portion 215 will not detach and fly out due to rapid outflow of the emissions.

The first groove 2141, the second groove 2142, and the third groove 2143 may be straight grooves or arc-shaped grooves. If the first groove 2141 is a straight groove, the angle between a straight direction where the first groove 2141 is located and the first direction Z is α; or if the first groove 2141 is an arc-shaped groove, the angle between a plane where the first groove 2141 is located and the first direction Z is α. For example, the peripheral wall 211 is cuboid, the peripheral wall 211 includes four side walls connected end to end in turn, the pressure relief groove 214 may be disposed on the side wall of the peripheral wall 211, the first groove 2141 may be a straight groove, and the angle between the straight direction of the first groove 2141 and the first direction Z is α. For another example, the peripheral wall 211 is cylindrical. Due to the curved structure of the peripheral wall 211, the first groove 2141 is an arc-shaped groove that extends along an elliptical trajectory, and the angle between the plane where the first groove 2141 is located and the first direction Z is α, where the plane is an oblique section of the peripheral wall 211.

In the embodiment of the present application, the angle between the extension direction of the first groove 2141 and the first direction Z is less than 90° and not less than 45°, so that the pressure relief portion 215 confined by the first groove 2141, the second groove 2142, and the third groove 2143 is in a tilt state. During pressure relief, the pressure relief portion 215 can open obliquely, which reduces occupation on an external space of the shell 21 after the pressure relief portion 215 opens, reduces the risk of blockage of the pressure relief portion 215, enables the pressure relief portion 215 to open to a greater extent, increases a pressure relief area of the shell 21, and increases a pressure relief rate.

In some embodiments, the angle α between the extension direction of the first groove 2141 and the first direction Z satisfies: 45°≤α≤75°.

For example, in FIG. 4, α=45°.

In this embodiment, α≤75° increases the tilt angle of the pressure relief portion 215, and further increases the pressure relief rate of the shell 21.

In some embodiments, with continued reference to FIG. 4, in the extension direction of the first groove 2141, the pressure relief portion 215 has an opening end 2151 and a flipping end 2152 opposite. The second groove 2142 is located at the opening end 2151, and the pressure relief portion 215 tilts towards one end close to the peripheral wall 211 in the first direction Z from the flipping end 2152 to the opening end 2151. In the first direction Z, the first groove 2141 is closer to that end than the third groove 2143. A length of the third groove 2143 is greater than that of the first groove 2141.

The opening end 2151 of the pressure relief portion 215 is an end where the pressure relief portion 215 is located in the second groove 2142, and the flipping end 2152 of the pressure relief portion 215 is an end where the pressure relief portion 215 is connected to other portions of the peripheral wall 211 except the pressure relief portion 215. During pressure relief, the pressure relief portion 215 may flip and open with the flipping end 2152 as the outside of the axial shell 21.

The pressure relief portion 215 tilts towards one end close to the peripheral wall 211 in the first direction Z from the flipping end 2152 to the opening end 2151, which is considered as the pressure relief portion 215 tilting towards that end. That is, the flipping end 2152 is further away from that end in the first direction Z than the opening end 2151. It may also be understood that an end, close to the flipping end 2152, of the first groove 2141 is further away from that end in the first direction Z than an end, close to the opening end 2151, of the first groove 2141. In brief, towards which end of the peripheral wall 211 the pressure relief portion 215 tilts, a groove segment (third groove 2143) away from that end in the pressure relief groove 214 is longer than a groove segment (first groove 2141) close to that end.

For convenient description, two ends of the peripheral wall 211 in the first direction Z are defined as a first end portion 2111 and a second end portion 2112, as shown in FIG. 4. For example, on the peripheral wall 211, the pressure relief portion 215 confined by the pressure relief groove 214 close to the first end portion 2111 is a first pressure relief portion 215a, and the pressure relief portion 215 confined by the pressure relief groove 214 close to the second end portion 2112 is a second pressure relief portion 215b. For the first pressure relief portion 215a, if the first pressure relief portion 215a tilts towards the second end portion 2112 from the flipping end 2152 to the opening end 2151, the first groove 2141 of the pressure relief groove 214 corresponding to the first pressure relief portion 215a is closer to the second end portion 2112 than the third groove 2143 in the first direction Z. For the second pressure relief portion 215b, if the second pressure relief portion 215b tilts towards the second end portion 2112 from the flipping end 2152 to the opening end 2151, the first groove 2141 of the pressure relief groove 214 corresponding to the second pressure relief portion 215b is closer to the second end portion 2112 than the third groove 2143 in the first direction Z.

For example, the peripheral wall 211 is cylindrical, both the first groove 2141 and the third groove 2143 are arc-shaped grooves that extend along an elliptical trajectory, and the length of the third groove 2143 is greater than that of the first groove 2141, that is, the arc length of the third groove 2143 is greater than that of the first groove 2141.

In this embodiment, towards which end of the peripheral wall 211 the pressure relief portion 215 tilts, the third groove 2143 away from that end in the pressure relief groove 214 is longer than the first groove 2141 close to that end, which can effectively increase the area of the pressure relief portion 215 and increase the degree of tilt of the pressure relief portion 215 after flipping and opening towards the outside of the shell 21, so that the pressure relief portion 215 can open to a greater extent to further increase the pressure relief area of the shell 21.

In other embodiments, the length of the third groove 2143 in the pressure relief groove 214 may alternatively be equal to that of the first groove 2141.

In some embodiments, the peripheral wall 211 is provided with at least one pressure relief groove group, and each pressure relief groove group includes a plurality of pressure relief grooves 214 arranged at intervals in a circumferential direction of the peripheral wall 211.

One, two, three, or more pressure relief grooves 214 may be on the peripheral wall 211. Each pressure relief groove group may include two, three, four, or more pressure relief grooves 214. Taking the cylindrical peripheral wall 211 as an example, the plurality of pressure relief grooves 214 in the pressure relief groove group may be evenly distributed at intervals in the circumferential direction of the peripheral wall 211.

In this embodiment, the plurality of pressure relief grooves 214 in the pressure relief groove group are arranged at intervals in the circumferential direction of the peripheral wall 211. This structure enables the shell 21 to release pressure from a plurality of different positions in the circumferential direction of the peripheral wall 211, thereby further increasing the pressure relief rate. In addition, due to the tilt arrangement of the pressure relief portion 215, more pressure relief portions 215 can be arranged in the circumferential direction of the peripheral wall 211.

In some embodiments, with continued reference to FIG. 4, the at least one pressure relief groove group includes a first pressure relief groove group 214a and a second pressure relief groove group 214b, and the first pressure relief groove group 214a and the second pressure relief groove group 214b are spaced on the peripheral wall 211 in the first direction Z.

Understandably, there is a plurality of pressure relief groove groups on the peripheral wall 211, one of the plurality of pressure relief groove groups is the first pressure relief groove group 214a, and another pressure relief groove group is the second pressure relief groove group 214b. Only the first relief groove group 214a and the second relief groove group 214b may be disposed on the peripheral wall 211, or other relief groove groups may alternatively be disposed in addition to the first relief groove group 214a and the second relief groove group 214b.

As shown in FIG. 4, for example, the first relief groove group 214a is close to the first end portion 2111 of the peripheral wall 211, the second relief groove group 214b is close to the second end portion 2112 of the peripheral wall 211, the pressure relief portion 215 confined by the pressure relief groove 214 in the first pressure relief groove group 214a is the first pressure relief portion 215a, and the pressure relief portion 215 confined by the pressure relief groove 214 in the second pressure relief groove group 214b is the second pressure relief portion 215b.

In this embodiment, the emissions inside the shell 21 can be discharged out from the pressure relief groove 214 in the first pressure relief groove group 214a and the pressure relief groove 214 in the second pressure relief groove group 214b when the battery cell 20 undergoes thermal runaway, thereby further increasing the pressure relief rate of the shell 21.

In some embodiments, with continued reference to 4, the tilt direction of the pressure relief portion 215 (first pressure relief portion 215a) confined by the pressure relief groove 214 in the first pressure relief groove group 214a is the same as that of the pressure relief portion 215 (second pressure relief portion 215b) confined by the pressure relief groove 214 in the second pressure relief groove group 214b.

Both the first pressure relief portion 215a and the second pressure relief portion 215b tilt towards the first end portion 2111 of the peripheral wall 211, that is, the flipping end 2152 of the first pressure relief portion 215a is further away from the first end portion 2111 than the opening end 2151 in the first direction Z, and the flipping end 2152 of the second pressure relief portion 215b is also further away from the first end portion 2111 than the opening end 2151 in the first direction Z. As shown in FIG. 4, both the first pressure relief portion 215a and the second pressure relief portion 215b alternatively tilt towards the second end portion 2112 of the peripheral wall 211, that is, the flipping end 2152 of the first pressure relief portion 215a is further away from the second end portion 2112 than the opening end 2151 in the first direction Z, and the flipping end 2152 of the second pressure relief portion 215b is also further away from the second end portion 2112 than the opening end 2151 in the first direction Z.

In this embodiment, the tilt directions of the first pressure relief portion 215a and the second pressure relief portion 215b are the same, so that the first pressure relief portion 215a and the second pressure relief portion 215b tilt towards the same end of the peripheral wall 211 when opening towards the outside of the shell 21, and the emissions inside the shell 21 can flow towards the same end of the peripheral wall 211.

When there is an obstruction at the first end portion 2111 of the peripheral wall 211, both the first pressure relief portion 215a and the second pressure relief portion 215b may tilt towards the second end portion 2112, so that the emissions inside the shell 21 flow towards the second end portion 2112 during pressure relief to reduce the impact of the blockage on the flowing of the emissions. Similarly, when there is an obstruction at the second end portion 2112 of the peripheral wall 211, both the first pressure relief portion 215a and the second pressure relief portion 215b may tilt towards the first end portion 2111, so that the emissions inside the shell 21 flow towards the first end portion 2111 during pressure relief to reduce the impact of the blockage on the flowing of the emissions.

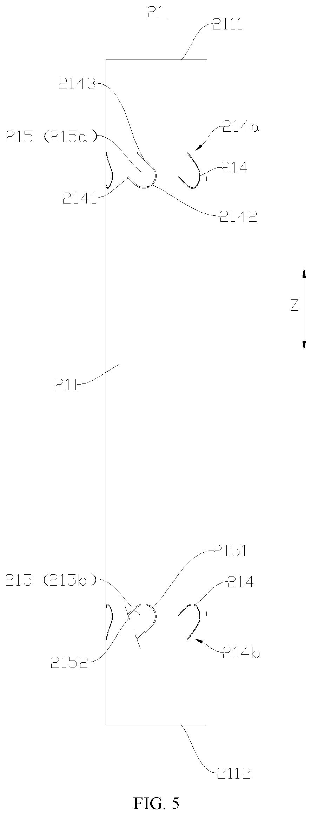

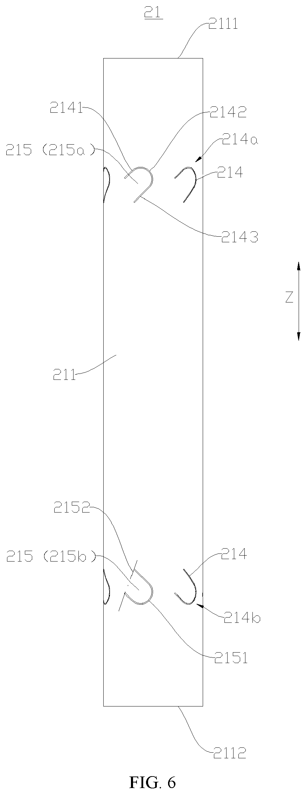

In some embodiments, refer to FIG. 5 and FIG. 6. FIG. 5 is a schematic structural diagram of a shell 21 according to other embodiments of the present application, and FIG. 6 is a schematic structural diagram of a shell 21 according to still other embodiments of the present application. The tilt direction of the pressure relief portion 215 (first pressure relief portion 215a) confined by the pressure relief groove 214 in the first pressure relief groove group 214a is opposite to that of the pressure relief portion 215 (second pressure relief portion 215b) confined by the pressure relief groove 214 in the second pressure relief groove group 214b.

Understandably, if the first pressure relief portion 215a tilts towards the first end portion 2111, the second pressure relief portion 215b tilts towards the second end portion 2112; or if the first pressure relief portion 215a tilts towards the second end portion 2112, the second pressure relief portion 215b tilts towards the first end portion 2111.

The first pressure relief portion 215a and the second pressure relief portion 215b tilt towards two ends of the peripheral wall 211 separately when opening towards the outside of the shell 21, so that the emissions inside the shell 21 can flow towards the two ends of the peripheral wall 211 or a middle area of the peripheral wall 211.

In some embodiments, with continued reference to FIG. 5, in the first direction Z, a middle position of the peripheral wall 211 is located between the first pressure relief groove group 214a and the second pressure relief groove group 214b, and both the pressure relief portion 215 (first pressure relief portion 215a) confined by the pressure relief groove 214 in the first pressure relief groove group 214a and the pressure relief portion 215 (second pressure relief portion 215b) confined by the pressure relief groove 214 in the second pressure relief groove group 214b tilt towards the middle position.

For example, the first pressure relief portion 215a is closer to the first end portion 2111 of the peripheral wall 211 than the second pressure relief portion 215b. Both the first pressure relief portion 215a and the second pressure relief portion 215b tilt towards the middle position, that is, the first pressure relief portion 215a tilts towards the second end portion 2112, and the second pressure relief portion 215b tilts towards the first end portion 2111.

In this embodiment, during pressure relief, the emissions inside the shell 21 can flow towards the middle area of the peripheral wall 211. When there are obstructions at the two ends of the peripheral wall 211, the first pressure relief portion 215a and the second pressure relief portion 215b may be configured to tilt towards the middle position to reduce the impact of the obstructions at the two ends of the peripheral wall 211 on the flowing of the emissions.

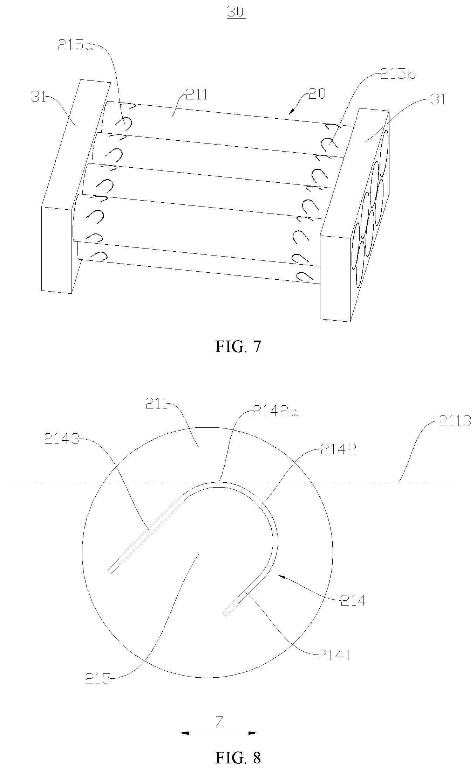

Refer to FIG. 7. FIG. 7 is a schematic structural diagram of a battery module 30 according to some embodiments of the present application. For example, a plurality of battery cells 20 are connected to form the battery module 30 through two mounting racks 31, where the two mounting racks 31 are mounted at two ends of the shells 21 of the battery cells 20 separately. In this case, the first pressure relief portions 215a and the second pressure relief portions 215b may tilt towards the middle position, so that the emissions inside the shells 21 flow towards the middle area of the peripheral wall 211 during pressure relief to avoid the two mounting racks 31.

In some embodiments, with continued reference to FIG. 6, in the first direction Z, the middle position of the peripheral wall 211 is located between the first pressure relief groove group 214a and the second pressure relief groove group 214b, and both the pressure relief portion 215 (first pressure relief portion 215a) confined by the pressure relief groove 214 in the first pressure relief groove group 214a and the pressure relief portion 215 (second pressure relief portion 215b) confined by the pressure relief groove 214 in the second pressure relief groove group 214b tilt away from the middle position.

For example, the first pressure relief portion 215a is closer to the first end portion 2111 of the peripheral wall 211 than the second pressure relief portion 215b. Both the first pressure relief portion 215a and the second pressure relief portion 215b tilt away from the middle position, that is, the first pressure relief portion 215a tilts towards the first end portion 2111, and the second pressure relief portion 215b tilts towards the second end portion 2112.

In this embodiment, during pressure relief, the emissions inside the shell 21 can flow towards the two ends of the peripheral wall 211. When there is an obstruction in the middle area of the peripheral wall 211, the first pressure relief portion 215a and the second pressure relief portion 215b may tilt away from the middle position to reduce the impact of the obstruction in the middle area of the peripheral wall 211 on the flowing of the emissions.

In some embodiments, refer to FIG. 8. FIG. 8 is a partially enlarged view of the shell 21 shown in FIG. 4, where the second groove 2142 is an arc-shaped groove.

It should be noted that, in the pressure relief groove 214, whether the length of the third groove 2143 is greater than that of the first groove 2141, or the length of the third groove 2143 is equal to that of the first groove 2141, the second groove 2142 may be configured as an arc-shaped groove. For example, in FIG. 8, the length of the third groove 2143 is greater than that of the first groove 2141.

In this embodiment, the second arc-shaped groove 2142 is simple in structure and easy to manufacture. In addition, the second arc-shaped groove 2142 is beneficial for the peripheral wall 211 to rupture along the second groove 2142 first and then along the first groove 2141 and the third groove 2143 when the pressure inside the shell 21 reaches the threshold, so that the pressure relief portion 215 flips and opens towards the outside of the shell 21.

In some embodiments, with continued reference to FIG. 8, the first groove 2141 is parallel to the third groove 2143, and both the first groove 2141 and the third groove 2143 are tangent to the second groove 2142.

In the embodiment where the peripheral wall 211 is cylindrical and both the first groove 2141 and the third groove 2143 are arc-shaped grooves extending along an elliptical trajectory, the first groove 2141 is parallel to the third groove 2143, that is, the plane where the first groove 2141 is located is parallel to the plane where the third groove 2143 is located.

In this embodiment, both the first groove 2141 and the third groove 2143 are tangent to the second groove 2142, so that the second groove 2142 transitions more smoothly to the first groove 2141 and the third groove 2143, the peripheral wall 211 ruptures more smoothly along the first groove 2141 and the third groove 2143 after rupturing along the second groove 2142, and the pressure relief portion 215 flips and opens more smoothly on the outside of the shell 21.

In some embodiments, the peripheral wall 211 is cylindrical.

Understandably, the shell 21 is of a cylindrical structure suitable for a cylindrical battery cell 20.

The cylindrical peripheral wall 211 enables the pressure relief portion 215 to be in a bent state. During pressure relief, the bent pressure relief portion 215 is more likely to flip and open towards the outside of the shell 21.

In the embodiment where the length of the third groove 2143 of the pressure relief groove 214 is greater than that of the first groove 2141 and the second groove 2142 is arc-shaped, due to the cylindrical structure of the peripheral wall 211 and the tilt arrangement of the pressure relief groove 214, the second groove 2142 will form an opening position 2142a at a position tangent to a busbar 2113 (a line extending in the first direction Z) of the peripheral wall 211. When the pressure or temperature inside the shell 21 reaches the threshold, the peripheral wall 211 first ruptures at the opening position 2142a, and then gradually ruptures along the third groove 2143 and the first groove 2141 from the opening position 2142a to two sides. Because the length of the third groove 2143 is greater than that of the first groove 2141, the difference between trajectories of the peripheral wall 211 that gradually ruptures from the opening position 2142a to the two sides is reduced, that is, the difference between a first trajectory from the opening position 2142a to an end, away from the second groove 2142, of the third groove 2143 and a second trajectory from the opening position 2142a to an end, away from the second groove 2142, of the first groove 2141 is reduced, which enables the pressure relief portion 215 to open more completely.

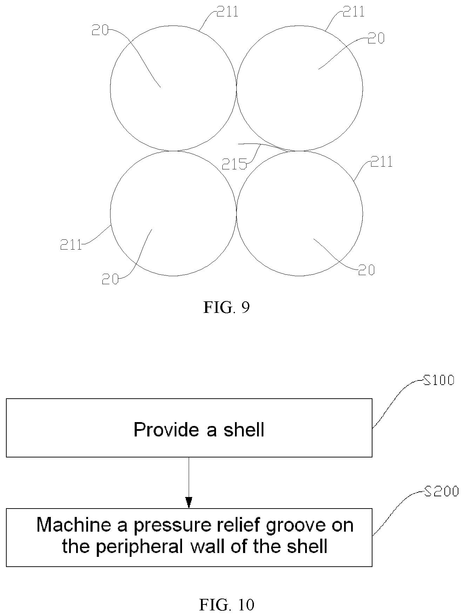

Refer to FIG. 9. FIG. 9 is a schematic arrangement diagram of battery cells 20 according to some embodiments of the present application. For example, four battery cells 20 are distributed in a rectangular array. A middle area among the four battery cells 20 forms an avoidance space. When one battery cell 20 relieves pressure due to thermal runaway, the pressure relief portion 215 on the peripheral wall 211 flips and opens outwards to enter the avoidance space, and the degree of opening of the pressure relief portion 215 will be limited by the size of the avoidance space. When the size of the avoidance space is constant, the pressure relief portion 215 opens obliquely, so that the pressure relief portion 215 can open to a greater extent to increase the pressure relief area and increase the pressure relief rate.

In some embodiments, the pressure relief groove 214 is disposed on an outer surface of the peripheral wall 211.

The pressure relief groove 214 may be formed on the outer surface of the peripheral wall 211 by carving, stamping, milling, or the like.

For example, the peripheral wall 211 is cylindrical. The outer surface of the peripheral wall 211 is an outer circumference surface of the peripheral wall 211.

In this embodiment, the pressure relief portion 215 is disposed on the outer surface of the peripheral wall 211, so that the formation of the pressure relief groove 214 is simpler and more convenient.

In other embodiments, the pressure relief groove 214 may alternatively be disposed on an inner surface of the peripheral wall 211.

An embodiment of the present application provides a battery cell 20, including an electrode assembly 22 and the shell 21 provided in any of the foregoing embodiments, where the shell 21 is used for accommodating the electrode assembly 22.

An embodiment of the present application provides a battery 100, including a box body 10 and the battery cell 20 provided in any of the foregoing embodiments, where the box body 10 is used for accommodating the battery cell 20.

An embodiment of the present application provides a power consumption device, including the battery 100 provided in any of the foregoing embodiments.

The power consumption device may be any of the foregoing devices using the battery 100.

Refer to FIG. 4. An embodiment of the present application provides a cylindrical shell for accommodating an electrode assembly 22. The shell 21 includes a peripheral wall 211 and a pressure relief groove 214 disposed on an outer surface of the peripheral wall 211, where the pressure relief groove 214 includes a first groove 2141, a second groove 2142, and a third groove 2143; the first groove 2141 is opposite to the third groove 2143; and the first groove 2141, the second groove 2142, and the third groove 2143 are sequentially connected to jointly confine a pressure relief portion 215. An angle α between an extension direction of the first groove 2141 and an extension direction of the peripheral wall 211 satisfies: 45°≤α≤75°.

In such a cylindrical shell, the angle between the extension direction of the first groove 2141 and the first direction Z is not more than 75° and not less than 45°, so that the pressure relief portion 215 confined by the first groove 2141, the second groove 2142, and the third groove 2143 is in a tilt state. During pressure relief, the pressure relief portion 215 can open obliquely, which reduces occupation on an external space of the shell 21 after the pressure relief portion 215 opens, reduces the risk of blockage of the pressure relief portion 215, enables the pressure relief portion 215 to open to a greater extent, increases a pressure relief area of the shell 21, increases a pressure relief rate, and improves the safety of the battery cell 20.

Refer to FIG. 10. FIG. 10 is a flowchart of a manufacturing method for a shell 21 according to some embodiments of the present application. An embodiment of the present application provides a manufacturing method for a shell 21, the method including:
S100: Provide a shell 21, where the shell 21 has a peripheral wall 211 extending in a first direction Z;
S200: Machine a pressure relief groove 214 on the peripheral wall 211 of the shell 21.

The pressure relief groove 214 includes a first groove 2141, a second groove 2142, and a third groove 2143; the first groove 2141 is opposite to the third groove 2143; the first groove 2141, the second groove 2142, and the third groove 2143 are sequentially connected to jointly confine a pressure relief portion 215; the pressure relief portion 215 is configured to flip and open towards an outside of the shell 21 when a pressure or temperature inside the shell 21 reaches a threshold, so as to release the pressure inside the shell 21; and an angle α between an extension direction of the first groove 2141 and the first direction Z satisfies: 45°≤α<90°.

It should be noted that relevant structures of the shell 21 manufactured by the manufacturing method provided in the foregoing embodiment may be referenced to the shell 21 provided in each foregoing embodiment, and will not be repeated here.

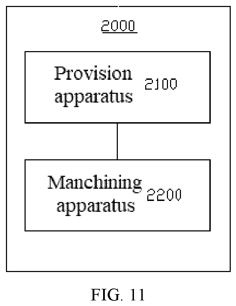

Refer to FIG. 11. FIG. 11 is a schematic block diagram of a manufacturing device 2000 for a shell 21 according to some embodiments of the present application. An embodiment of the present application further provides a manufacturing device 2000 for a shell 21. The manufacturing device 2000 includes a provision apparatus 2100 and a machining apparatus 2200. The provision apparatus 2100 is configured to provide a shell 21, where the shell 21 has a peripheral wall 211 extending in a first direction Z. The machining apparatus 2200 is configured to machine a pressure relief groove 214 on the peripheral wall 211.

The pressure relief groove 214 includes a first groove 2141, a second groove 2142, and a third groove 2143; the first groove 2141 is opposite to the third groove 2143; the first groove 2141, the second groove 2142, and the third groove 2143 are sequentially connected to jointly confine a pressure relief portion 215; the pressure relief portion 215 is configured to flip and open towards an outside of the shell 21 when a pressure or temperature inside the shell 21 reaches a threshold, so as to release the pressure inside the shell 21; and an angle α between an extension direction of the first groove 2141 and the first direction Z satisfies: 45°≤α<90°.

It should be noted that relevant structures of the shell 21 manufactured by the manufacturing device 2000 provided in the foregoing embodiment may be referenced to the shell 21 provided in each foregoing embodiment, and will not be repeated here.

It should be noted that the embodiments in the present application and the features in the embodiments may be combined with each other on a non-conflict basis.

## Claims

1. A shell (21) for accommodating an electrode assembly (22), comprising:
a peripheral wall (211) that extends in a first direction (Z) and is configured for enclosing an outer side of the electrode assembly (22), wherein the peripheral wall (211) has a pressure relief portion (215), and the pressure relief portion (215) is configured to flip and open towards an outside of the shell (21) when a pressure or temperature inside the shell (21) reaches a threshold, so as to release the pressure inside the shell (21); and
a pressure relief groove (214) disposed on the peripheral wall (211), wherein the pressure relief groove (214) comprises a first groove (2141), a second groove (2142), and a third groove (2143), wherein the first groove (2141) is opposite to the third groove (2143), and the first groove (2141), the second groove (2142), and the third groove (2143) are sequentially connected to jointly confine a pressure relief portion (215), wherein the second groove (2142) is an arc-shaped groove and wherein the first groove (2141) and the third groove (2143) are parallel and are both tangent to the second groove (2142); and wherein an angle α is formed between an extension direction of the first groove (2141) and the first direction (Z), where 45°≤α<90°;
and wherein the peripheral wall (211) is a cylindrical or a cuboid, and the first direction (Z) is a length direction of the peripheral wall (211);
and wherein the peripheral wall (211) is provided with at least one pressure relief groove group, and each pressure relief groove group comprises a plurality of pressure relief grooves (214) arranged at intervals in a circumferential direction of the peripheral wall (211);
and wherein the at least one pressure relief groove group comprises a first pressure relief groove group (214a) and a second pressure relief groove group (214b), and the first pressure relief groove group (214a) and the second pressure relief groove group (214b) are spaced on the peripheral wall (211) in the first direction (Z);
and wherein:
(i) either a tilt direction of the pressure relief portion (215) confined by the pressure relief groove (214) in the first pressure relief groove group (214a) is the same as that of the pressure relief portion (215) confined by the pressure relief groove (214) in the second pressure relief groove group (214b),
(ii) or the tilt direction of the pressure relief portion (215) confined by the pressure relief groove (214) in the first pressure relief groove group (214a) is opposite to that of the pressure relief portion (215) confined by the pressure relief groove (214) in the second pressure relief groove group (214b), and:
(iia) either in the first direction (Z), a middle position of the peripheral wall (211) is located between the first pressure relief groove group (214a) and the second pressure relief groove group (214b), and both the pressure relief portion (215) confined by the pressure relief groove (214) in the first pressure relief groove group (214a) and the pressure relief portion (215) confined by the pressure relief groove (214) in the second pressure relief groove group (214b) tilt in a direction towards the middle position;
or
(iib) in the first direction (Z), the middle position of the peripheral wall (211) is located between the first pressure relief groove group (214a) and the second pressure relief groove group (214b), and both the pressure relief portion (215) confined by the pressure relief groove (214) in the first pressure relief groove group (214a) and the pressure relief portion (215) confined by the pressure relief groove (214) in the second pressure relief groove group (214b) tilt in a direction away from the middle position.

2. The shell (21) according to claim 1, wherein the angle α satisfies: 45°≤α≤75°.

3. The shell (21) according to claim 1 or 2, wherein in the extension direction of the first groove (2141), the pressure relief portion (215) has an opening end (2151) and a flipping end (2152) opposite; the second groove (2142) is located at the opening end (2151), and the pressure relief portion (215) tilts, from the flipping end (2152) to the opening end (2151), towards one end close to the peripheral wall (211) in the first direction (Z), wherein
in the first direction (Z), the first groove (2141) is closer to that end than the third groove (2143); and a length of the third groove (2143) is greater than that of the first groove (2141).

4. The shell (21) according to any one of claims 1-3,
wherein the pressure relief groove (214) is disposed on an outer surface of the peripheral wall (211).

5. A battery cell (20), comprising:
an electrode assembly (22); and
the shell (21) according to any one of claims 1-4, wherein the shell (21) is configured for accommodating the electrode assembly (22).

6. A battery (100), comprising:
the battery cells (20) according to claim 5; and
a box body (10) configured for accommodating the battery cell (20).

7. A power consumption device, comprising the battery (100) according to claim 6.

## Patentansprüche

1. Schale (21) zum Aufnehmen einer Elektrodenbaugruppe (22), die Folgendes umfasst:
eine Umfangswand (211), die sich in einer ersten Richtung (Z) erstreckt und zum Umschließen einer Außenseite der Elektrodenbaugruppe (22) ausgelegt ist, wobei die Umfangswand (211) einen Druckentspannungsabschnitt (215) aufweist und der Druckentspannungsabschnitt (215) so ausgelegt ist, dass er sich zu einer Außenseite der Schale (21) hin umdreht und öffnet, wenn ein Druck oder eine Temperatur innerhalb der Schale (21) einen Schwellenwert erreicht, um den Druck innerhalb der Schale (21) zu entspannen; und
eine Druckentspannungsnut (214), die auf der Umfangswand (211) angeordnet ist, wobei die Druckentspannungsnut (214) eine erste Nut (2141), eine zweite Nut (2142) und eine dritte Nut (2143) umfasst, wobei die erste Nut (2141) der dritten Nut (2143) gegenüberliegt und die erste Nut (2141), die zweite Nut (2142) und die dritte Nut (2143) sequentiell verbunden sind, um gemeinsam einen Druckentspannungsabschnitt (215) zu begrenzen, wobei die zweite Nut (2142) eine bogenförmige Nut ist und wobei die erste Nut (2141) und die dritte Nut (2143) parallel sind und beide tangential zu der zweiten Nut (2142) sind; und wobei
ein Winkel α zwischen einer Erstreckungsrichtung der ersten Nut (2141) und der ersten Richtung (Z) gebildet ist, wobei 45°≤α<90°;
und wobei die Umfangswand (211) ein Zylinder oder ein Quader ist und die erste Richtung (Z) eine Längsrichtung der Umfangswand (211) ist;
und wobei die Umfangswand (211) mit mindestens einer Druckentspannungsnutgruppe versehen ist und jede Druckentspannungsnutgruppe mehrere Druckentspannungsnuten (214) umfasst, die in Intervallen in einer Umfangsrichtung der Umfangswand (211) angeordnet sind;
und wobei die mindestens eine Druckentspannungsnutgruppe eine erste Druckentspannungsnutgruppe (214a) und eine zweite Druckentspannungsnutgruppe (214b) umfasst und die erste Druckentspannungsnutgruppe (214a) und die zweite Druckentspannungsnutgruppe (214b) auf der Umfangswand (211) in der ersten Richtung (Z) beabstandet sind;
und wobei:
(i) entweder eine Neigungsrichtung des Druckentspannungsabschnitts (215), der durch die Druckentspannungsnut (214) in der ersten Druckentspannungsnutgruppe (214a) begrenzt ist, die gleiche wie diejenige des Druckentspannungsabschnitts (215) ist, der durch die Druckentspannungsnut (214) in der zweiten Druckentspannungsnutgruppe (214b) begrenzt ist,
(ii) oder die Neigungsrichtung des Druckentspannungsabschnitts (215), der durch die Druckentspannungsnut (214) in der ersten Druckentspannungsnutgruppe (214a) begrenzt ist, entgegengesetzt zu derjenigen des Druckentspannungsabschnitts (215) ist, der durch die Druckentspannungsnut (214) in der zweiten Druckentspannungsnutgruppe (214b) begrenzt ist, und:
(iia) entweder in der ersten Richtung (Z) eine Mittelposition der Umfangswand (211) zwischen der ersten Druckentspannungsnutgruppe (214a) und der zweiten Druckentspannungsnutgruppe (214b) liegt und sich sowohl der Druckentspannungsabschnitt (215), der durch die Druckentspannungsnut (214) in der ersten Druckentspannungsnutgruppe (214a) begrenzt ist, als auch der Druckentspannungsabschnitt (215), der durch die Druckentspannungsnut (214) in der zweiten Druckentspannungsnutgruppe (214b) begrenzt ist, in einer Richtung zur Mittelposition hin neigen;
oder
(iib) in der ersten Richtung (Z) die Mittelposition der Umfangswand (211) zwischen der ersten Druckentspannungsnutgruppe (214a) und der zweiten Druckentspannungsnutgruppe (214b) liegt und sich sowohl der Druckentspannungsabschnitt (215), der durch die Druckentspannungsnut (214) in der ersten Druckentspannungsnutgruppe (214a) begrenzt ist, als auch der Druckentspannungsabschnitt (215), der durch die Druckentspannungsnut (214) in der zweiten Druckentspannungsnutgruppe (214b) begrenzt ist, in einer Richtung von der Mittelposition weg neigen.

2. Schale (21) nach Anspruch 1, wobei der Winkel α Folgendes erfüllt: 45°≤α≤75°.

3. Schale (21) nach Anspruch 1 oder 2, wobei in der Erstreckungsrichtung der ersten Nut (2141) der Druckentspannungsabschnitt (215) ein Öffnungsende (2151) und ein gegenüberliegendes sich umdrehendes Ende (2152) aufweist; wobei die zweite Nut (2142) an dem Öffnungsende (2151) liegt und sich der Druckentspannungsabschnitt (215) in der ersten Richtung (Z) von dem sich umdrehenden Ende (2152) zu dem Öffnungsende (2151) zu einem Ende nahe der ersten Umfangsrichtung (211) hin neigt, wobei
in der ersten Richtung (Z) die erste Nut (2141) näher an diesem Ende liegt als die dritte Nut (2143); und eine Länge der dritten Nut (2143) größer als diejenige der ersten Nut (2141) ist.

4. Schale (21) nach einem der Ansprüche 1-3,
wobei die Druckentspannungsnut (214) auf einer Außenfläche der Umfangswand (211) angeordnet ist.

5. Batteriezelle (20), die Folgendes umfasst:
eine Elektrodenbaugruppe (22); und
die Schale (21) nach einem der Ansprüche 1-4, wobei die Schale (21) zum Aufnehmen der Elektrodenbaugruppe (22) ausgelegt ist.

6. Batterie (100), die Folgendes umfasst:
die Batteriezellen (20) nach Anspruch 5; und
einen Kastenkörper (10), der zum Aufnehmen der Batteriezelle (20) ausgelegt ist.

7. Stromverbrauchsvorrichtung, die die Batterie (100) nach Anspruch 6 umfasst.

## Revendications

1. Boîtier (21) pour recevoir un ensemble d'électrodes (22), comprenant :
une paroi périphérique (211) qui s'étend dans une première direction (Z) et est configurée pour enfermer un côté extérieur de l'ensemble d'électrodes (22), la paroi périphérique (211) présentant une partie de décompression (215), et la partie de décompression (215) est configurée pour basculer et s'ouvrir vers l'extérieur du boîtier (21) lorsqu'une pression ou une température à l'intérieur du boîtier (21) atteint un seuil, de manière à relâcher la pression à l'intérieur du boîtier (21) ; et
une rainure de décompression (214) disposée sur la paroi périphérique (211), la rainure de décompression (214) comprenant une première rainure (2141), une deuxième rainure (2142), et une troisième rainure (2143), la première rainure (2141) étant opposée à la troisième rainure (2143), et la première rainure (2141), la deuxième rainure (2142), et la troisième rainure (2143) étant reliées successivement pour confiner conjointement une partie de décompression (215), la deuxième rainure (2142) étant une rainure en forme d'arc et la première rainure (2141) et la troisième rainure (2143) étant parallèles et toutes deux tangentes à la deuxième rainure (2142) ; et
un angle α étant formé entre une direction d'extension de la première rainure (2141) et la première direction (Z), avec 45°≤α°<90° ;
et la paroi périphérique (211) étant un cylindre ou un cuboïde, et la première direction (Z) étant une direction de longueur de la paroi périphérique (211) ;
et la paroi périphérique (211) étant pourvue d'au moins un groupe de rainures de décompression et chaque groupe de rainures de décompression comprenant une pluralité de rainures de décompression (214) disposées à intervalles dans une direction circonférentielle de la paroi périphérique (211) ;
et l'au moins un groupe de rainures de décompression comprenant un premier groupe de rainures de décompression (214a) et un second groupe de rainures de décompression (214b), et le premier groupe de rainures de décompression (214a) et le second groupe de rainures de décompression (214b) étant espacés sur la paroi périphérique (211) dans la première direction (Z) ; et :
(i) soit une direction d'inclinaison de la partie de décompression (215) confinée par la rainure de décompression (214) dans le premier groupe de rainures de décompression (214a) étant la même que celle de la partie de décompression (215) confinée par la rainure de décompression (214) dans le second groupe de rainures de décompression (214b),
(ii) soit la direction d'inclinaison de la partie de décompression (215) confinée par la rainure de décompression (214) dans le premier groupe de rainures de décompression (214a) étant opposée à celle de la partie de décompression (215) confinée par la rainure de décompression (214) dans le second groupe de rainures de décompression (214b), et :
(iia) soit dans la première direction (Z), une position médiane de la paroi périphérique (211) étant située entre le premier groupe de rainures de décompression (214a) et le second groupe de rainures de décompression (214b), et à la fois la partie de décompression (215) confinée par la rainure de décompression (214) dans le premier groupe de rainures de décompression (214a) et la partie de décompression (215) confinée par la rainure de décompression (214) dans le second groupe de rainures de décompression (214b) s'inclinant dans une direction vers la position médiane ;
ou
(iib) dans la première direction (Z), la position médiane de la paroi périphérique (211) étant située entre le premier groupe de rainures de décompression (214a) et le second groupe de rainures de décompression (214b), et à la fois la partie de décompression (215) confinée par la rainure de décompression (214) dans le premier groupe de rainures de décompression (214a) et la partie de décompression (215) confinée par la rainure de décompression (214) dans le second groupe de rainures de décompression (214b) s'inclinant dans une direction opposée à la position médiane.

2. Boîtier (21) selon la revendication 1, l'angle α satisfaisant : 45°≤α≤75°.

3. Boîtier (21) selon la revendication 1 ou 2, dans la direction d'extension de la première rainure (2141), la partie de décompression (215) ayant une extrémité d'ouverture (2151) et une extrémité de basculement (2152) opposée ; la seconde rainure (2142) étant située au niveau de l'extrémité d'ouverture (2151) 211, et la partie de décompression (215) s'inclinant, de l'extrémité de basculement (2152) à l'extrémité d'ouverture (2151), vers une extrémité proche de la paroi périphérique (Z),
dans la première direction (Z), la première rainure (2141) étant plus proche de cette extrémité que la troisième rainure (2143) ; et une longueur de la troisième rainure (2143) étant plus grande que celle de la première rainure (2141).

4. Boîtier (21) selon l'une quelconque des revendications 1 à 3,
la rainure de décompression (214) étant disposée sur une surface extérieure de la paroi périphérique (211).

5. Cellule de batterie (20), comprenant :
un ensemble d'électrodes (22) ; et
le boîtier (21) selon l'une quelconque des revendications 1 à 4, le boîtier (21) étant configuré pour recevoir l'ensemble d'électrodes (22).

6. Batterie (100) comprenant :
les cellules de batterie (20) selon la revendication 5 ; et
un corps de boîte (10) configuré pour recevoir l'élément de batterie (20).

7. Dispositif de consommation d'énergie, comprenant la batterie (100) selon la revendication 6.
